# EUROPEAN PATENT APPLICATION

(11) **EP 3 736 730 A1**
(43) Date of publication of application: **11.11.2020**
(21) Application number: 19465532.0
(22) Date of filing: 07.05.2019
(51) Int. Cl.: G06K 9/00, G06K 9/62

(54) **CONVOLUTIONAL NEURAL NETWORK WITH REDUCED COMPLEXITY**

(71) Applicant: Elektrobit Automotive GmbH, 91058 Erlangen (DE)
(72) Inventor: Vasilcoi, Andrei, 500423 Brasov (RO); Radu, Petru, 300692 Timisoara (RO); Marina, Liviu, 500314 Brasov (RO); Trasnea, Bogdan, 507080 Brasov (RO); Grigorescu, Sorin Mihai, 500132 Brasov (RO)
(74) Representative: Thies, Stephan

(57) **Abstract**

The present invention is related to a convolutional neural network (CNN) and to method, a computer program, and an apparatus for determining a driving context of a vehicle, which make use of such a convolutional neural network (CNN). The convolutional neural network (CNN) comprises one or more convolutional layers (CL) and one or more pooling layers (PL). In addition, the convolutional neural network (CNN) employs at least one non-trainable classifier (NTC) for assigning a class label.

## Description

The present invention is related to a convolutional neural network, in particular for autonomous driving applications, and to method, a computer program, and an apparatus for determining a driving context of a vehicle, which make use of such a convolutional neural network. The invention is further related to a driver assistance system, which employs such a method or apparatus for determining a driving context of a vehicle, and to an autonomous or semi-autonomous vehicle comprising such a driver assistance system.

The driving strategies deployed by highly autonomous driving systems are dependent on the driving context, i.e. different driving strategies are used when the ego-car is driving on a motorway, in a city, or when it is trying to park, etc. Accordingly, in order to enable a highly autonomous driving system to select an optimal driving strategy, it first needs to be aware of the context in which the vehicle is driving. For this purpose, sensors mounted on the car generate data, which is then processed to model various functions of the highly autonomous driving system.

In machine learning, some major application scenarios involve image feature extraction. Classical image feature extraction may be time consuming and require skilled engineers to develop feature extraction algorithms. Deep Learning architectures are employed to address the automation of feature learning from images, and have become the preferred choice of feature extraction for object detection and classification in image processing and computer vision. A specific type of deep learning neural networks, which imitate the classical convolution operation from the image processing field, are called convolutional neural networks.

Occupancy grids are widely used in the field of autonomous driving. For example, a radar sensor may be used to generate a map of the space surrounding the vehicle. This map has the form of a matrix, with its cells being 'occupied' or 'available' depending on whether the radar sensor detects an object at the respective location or not. The occupancy grids created from radar scans are typically converted into grey-scale images. The pixel values are used as input data in training a convolutional neural network. The convolutional neural network is subsequently employed to classify the environment, e.g. country road, motorway, parking space, etc.

Although convolutional neural networks are capable of eliminating the feature design stage, their complexity increases proportionally with the size of the input data and the desired task.

Two main issues need to be considered if convolutional neural networks shall be used for autonomous driving applications. A first issue is the large number of parameters, often a few million parameters, which require significant memory resources. A second issue is an increased power consumption of embedded devices mounted on vehicles operating with deep neural networks. In the automotive industry, the memory resources are generally limited and the power consumption has to be minimized.

It is an object of the present invention to provide a solution for reducing the complexity of a convolutional neural network and to thus increase the usability of convolutional neural networks in the automotive industry.

This object is achieved by a convolutional neural network according to claim 1, by a computer program code according to claim 7, which implements this convolutional neural network, by a method for determining a driving context of a vehicle according to claim 8, by a computer program code according to claim 9, which implements this method, and by an apparatus for determining a driving context of a vehicle according to claim 10. The dependent claims include advantageous further developments and improvements of the present principles as described below.

According to a first aspect, a convolutional neural network for processing input data comprises one or more convolutional layers and one or more pooling layers and employs at least one non-trainable classifier for assigning a class label. Accordingly, a computer program code comprises instructions, which, when executed by at least one processor, cause the at least one processor to implement a convolutional neural network according to the invention.

The term computer has to be understood broadly. In particular, it also includes embedded devices and other processor-based data processing devices.

The computer program code can, for example, be made available for electronic retrieval or stored on a computer-readable storage medium.

The proposed solution aims at simplifying the architecture of a typical convolutional neural network. A typical convolutional neural network consists of a sequence of convolutional layers, interspersed with activation functions and pooling layers, and a fully connected layer at the output of the network. The filters that are used in the first layer typically try to detect raw features, such as curves, edges or circles. As the processing moves to the next layers, more complex and larger features are employed. In order to reduce the complexity of the architecture, at least one non-trainable classifier is employed towards the end of the network. The reasoning behind this idea is that the first levels of convolution in a typical convolutional neural network learn the basic features from an input image. Once the features are obtained by the network, a simpler machine learning algorithm, may be employed.

In an advantageous embodiment, the at least one non-trainable classifier is a k-NN classifier. In this embodiment, a typical convolutional neural network terminates by employing a k-NN classifier, i.e. a k-Nearest Neighbor classifier, after several layers of convolution are trained and the dimension is reduced by applying a small number of pooling layers. The dimensionality reduction obtained by applying the pooling layers makes the k-NN classifier suitable for the classification task.

In an advantageous embodiment, parameters of the convolutional neural network are optimized through genetic algorithms. By employing evolutionary algorithms, i.e. genetic algorithms, to optimize the reduced number of remaining parameters of the convolutional neural network, it is possible to compensate for a potential loss of performance caused by the elimination of a part of the convolutional neural network.

In an advantageous embodiment, the convolutional neural network comprises two or three pooling layers. This ensures that the proposed algorithm can be implemented with the typical memory space available in embedded devices mounted in a car.

In an advantageous embodiment, the input data are an occupancy grid generated based on sensor data of one or more sensors of a vehicle, and the class label indicates a driving context. For example, the sensor data may be at least one of Sonar data, Lidar data, and Radar data. These types of data are typically available in autonomous or semi-autonomous vehicles. They are well-suited for detecting obstacles and thus for determining an occupancy grid.

Accordingly, a method for determining a driving context of a vehicle comprises:
- receiving sensor data of one or more sensors of the vehicle;
- determining an occupancy grid based on the sensor data; and
- processing the occupancy grid with a convolutional neural network according to the invention to determine the driving context.

Similarly, a computer program code comprises instructions, which, when executed by at least one processor, cause the at least one processor to determine a driving context of a vehicle by performing the steps of:
- receiving sensor data of one or more sensors of the vehicle;
- determining an occupancy grid based on the sensor data; and
- processing the occupancy grid with a convolutional neural network according to the invention to determine the driving context.

Again, the term computer has to be understood broadly. In particular, it also includes embedded devices and other processor-based data processing devices.

The computer program code can, for example, be made available for electronic retrieval or stored on a computer-readable storage medium.

According to a further aspect, an apparatus for determining a driving context of a vehicle comprises:
- an input for receiving sensor data of one or more sensors of the vehicle;
- an occupancy grid generating unit for determining an occupancy grid based on the sensor data; and
- a convolutional neural network according to the invention for processing the occupancy grid to determine the driving context.

The proposed solution shows a high classification accuracy. In addition, using a convolutional neural network according to the invention for processing the occupancy grid allows implementing the solution despite the generally limited memory resources available for automotive applications and the constraints with regard to the power consumption.

In one advantageous embodiment, the driving context is one of inner city, motorway, country road, tunnel, and parking lot. Of course, other types of driving scenes may likewise be considered. The driving strategies deployed by highly autonomous driving systems are dependent on the driving context, i.e. different driving strategies are used when the ego-car is driving on a motorway, driving on a country road, driving through a tunnel, in a city, or when it is trying to park, etc. As such, it is useful if at least some of these contexts can be identified.

Advantageously, a driver assistance system comprises a system according to the invention or is configured to perform a method according to the invention for selecting a driving strategy. Such a driver assistance system is favorably used in an autonomous or semi-autonomous vehicle. In this way it is ensured that during autonomous driving optimal driving strategies are selected.

Further features of the present invention will become apparent from the following description and the appended claims in conjunction with the figures.

### Figures

- Fig. 1: schematically illustrates a convolutional neural network according to the invention;
- Fig. 2: schematically illustrates a method for determining a driving context of a vehicle;
- Fig. 3: schematically illustrates a first embodiment of an apparatus for determining a driving context of a vehicle;
- Fig. 4: schematically illustrates a second embodiment of an apparatus for determining a driving context of a vehicle;
- Fig. 5: illustrates the behavior of a grid occupancy algorithm; and
- Fig. 6: shows a high-level architecture of the present approach towards a deep learning system for driving context determination.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

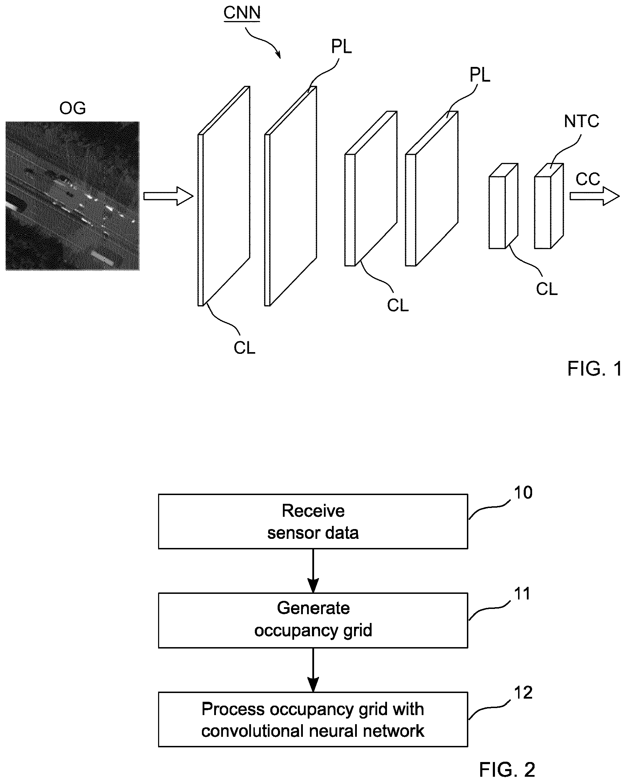

Fig. 1 schematically illustrates a convolutional neural network CNN according to the invention. Input data, e.g. an image representation constructed from an occupancy grid OG, are processed by a sequence of convolutional layers CL, interspersed with activation functions and pooling layers PL. At least one non-trainable classifier NTC is inserted into the convolutional neural network CNN for assigning a class label, e.g. a context classification CC. For example, the non-trainable classifier NTC may be a k-NN classifier. Inserting a non-trainable classifier NTC into a deep network architecture reduces the complexity of the network by eliminating the need of training the fully connected layers towards the output of the network.

For the parameter optimization of the convolutional neural network, genetic algorithms can be employed. The motivation behind using this type of algorithm is that this approach has the potential to outperform the standard variant of a neural network trained only on backpropagation, overcoming the gradient problem of local minima, and thus exploring solutions that are against the direction of the gradient.

A genetic algorithm evolves a population *P* of *N* individuals. In the present case, the individual, or genotype, represents the weight vector of the neural network. At every generation, each individual is evaluated, producing a fitness function that one may want to maximize or minimize. After the algorithm evaluates all the individuals in the generation, it carries on to perform a selection tournament, thus creating an elite of the best individuals. These individuals are guaranteed to take part in the next generation without modification. The rest of the generation will consist of genotypes that are produced by mating an elite parent with a random individual from the batch. Mating consists of exchanging features uniformly with an independent probability of *α* in the weight vectors, producing a new and different vector. A further process that is performed before evolving to the next generation is applying a mutation factor with another independent probability *β*. The mutation in this case is an additive Gaussian noise with a mean of 0 and a specified standard deviation. The interval for the Gaussian noise is selected such that the noise does not exceed the values that cause the sigmoid function to oversaturate, typically [-5,5]. Oversaturation means that the output of the Gaussian will be -1 (for -5) or 1 (for 5), thus losing information and rendering the operation meaningless. After all the processes have been completed, they will be repeated over the course of G generations. The best individual is then selected at the end of the procedure and conveys the deploy weights of the neural network.

By employing genetic algorithms in fine-tuning the weights of the deep network architecture, the classical backpropagation approach is avoided. This offers the possibility to skip the training of the entire architecture and to simply add a k-NN classifier or another non-trainable classifier NTC to output the final decision. In this way, the genetic algorithm will adjust the parameters of the layers that are kept from the original architecture in such a way that the working principle of k-NN is respected.

The genetic algorithm will create optimized features for the k-NN classifier, which are usually created using classical image processing techniques. The main parameters of the methodology proposed herein are the value of k and the level, i.e. the position of the pooling layer where the k-NN classifier will be introduced.

Taking into consideration the amount of parameters being tuned for a conventional convolutional neural network CNN with a few millions parameters, a significant training time is necessary. In addition, the memory space used by the proposed algorithm is rather large compared to the standard memory space found on embedded devices mounted in a car. To solve this issue, the learned weights are preferably freezed after a few convolution layers CL and two or three pooling layers PL.

The k-NN or k-Neareast Neighbor mechanism is a classification mechanism that assigns a class label to an input feature according to the class label that the majority of a reference set, or prototypes features, has. Various distance metrics can be employed for defining the neighbours of a given feature point from the feature space. The distance employed most often is the Euclidian distance, followed by Mahalanobis distance and Chebyshev distance. Other distances, like cosine distance or Pearson's correlation distance, can also be used.

Fig. 2 schematically illustrates a method for determining a driving context of a vehicle. In a first step, sensor data of one or more sensors of the vehicle are received 10. Advantageously, the sensor data are at least one of Sonar data, Lidar data, and Radar data. Then an occupancy grid is generated 11 based on the sensor data. Finally, the occupancy grid is processed 12 with a convolutional neural network for determining the driving context. By way of example, the driving context may be one of inner city, motorway, country road, tunnel, and parking lot.

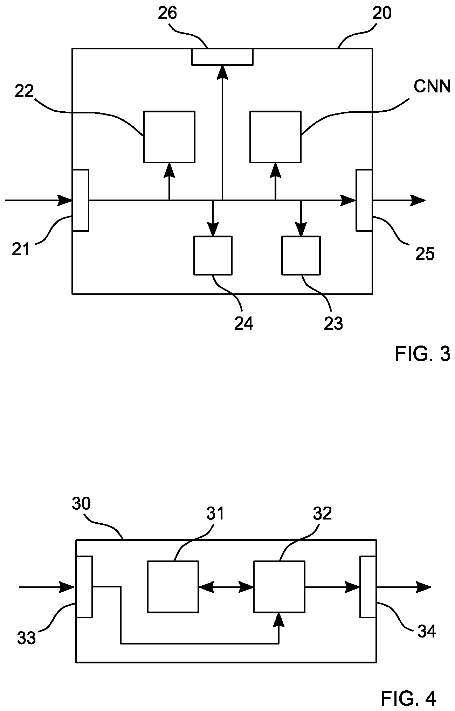

Fig. 3 schematically illustrates a block diagram of a first embodiment of an apparatus 20 for determining a driving context of a vehicle. The apparatus 20 has an input 21 for receiving sensor data SD of one or more sensors of the vehicle. Advantageously, the sensor data SD are at least one of Sonar data, Lidar data, and Radar data. An occupancy grid generating unit 22 generates an occupancy grid based on the sensor data SD. The apparatus 20 further has a convolutional neural network CNN for processing the occupancy grid to determine the driving context. For example, the driving context may be one of inner city, motorway, country road, tunnel, and parking lot. Data generated by the apparatus 20 can be stored in a local storage unit 24 or made available for further processing via an output 25. The output 25 may also be combined with the input 21 into a single bidirectional interface.

The occupancy grid generating unit 22 and the convolutional neural network CNN may be controlled by a controller 23. A user interface 26 may be provided for enabling a user to modify settings of the occupancy grid generating unit 22, the convolutional neural network CNN, or the controller 23. The occupancy grid generating unit 22, the convolutional neural network CNN, and the controller 23 can be embodied as dedicated hardware units. Of course, they may likewise be fully or partially combined into a single unit or implemented as software running on a processor.

A block diagram of a second embodiment of an apparatus 30 for determining a driving context of a vehicle is illustrated in Fig. 4. The apparatus 30 comprises a processing device 31 and a memory device 32. For example, the apparatus 30 may be a computer or an electronic control unit. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 24 and the memory device 32 may include volatile and/or non-volatile memory regions and storage devices such as hard disk drives, optical drives, and/or solid-state memories.

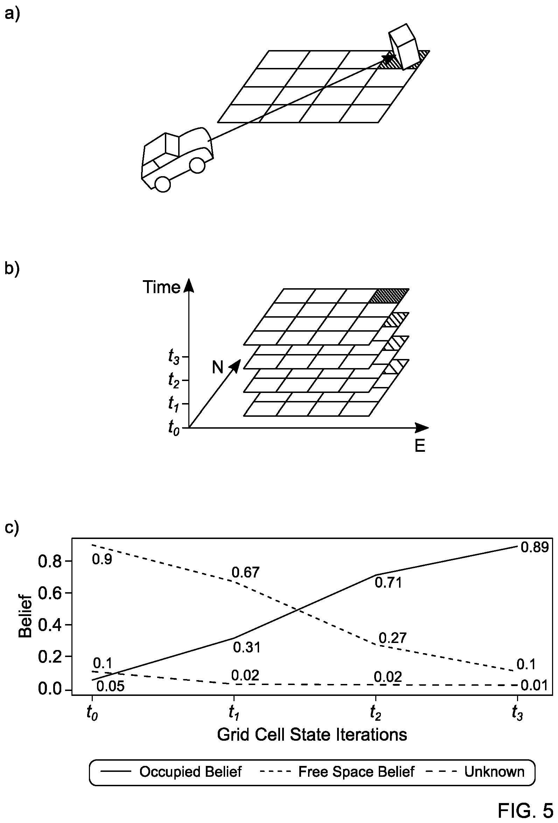

Occupancy grids are often used for environment perception and navigation, applications which require techniques for data fusion and obstacles avoidance. A pedagogical example illustrating the behavior of a grid occupancy algorithm is illustrated in Fig. 5, where an ego-car encounters an obstacle when driving on the North-East (NE) direction. Fig. 5a) illustrates the underlying measurement, Fig. 5b) graphically illustrates the cell occupancy belief evolution, Fig. 5c) indicates the corresponding numerical values of the belief evolution.

The basic idea behind occupancy grids is the division of the environment into 2D cells, where each cell represents the probability, or belief, of occupation. For autonomous driving, Sonar, Lidar, and Radar sensory data can be used to model the uncertainty of obstacles measurements and to derive the occupancy belief. A belief is assigned to every cell which intersects the ray of a range measurement. This information is then accumulated over time and fused into a single grid. Initially, a grid cell is considered to represent free space and the content of the grid layer gets degraded over time by gradually decreasing the occupancy information. The grid content is updated over and over again, in real-time, with each sensory measurement.

The occupancy grid computed with the above-described method represents the input to a convolutional neural network, which constructs a grid representation of the driving environment. The grid map is firstly converted into an image representation, where each grid cell is coded as an image pixel. White pixels represent obstacles, free space is coded with medium grey, while unknown states are represented in black. The higher a pixel intensity towards a specific colour code is, the higher the occupancy confidence is.

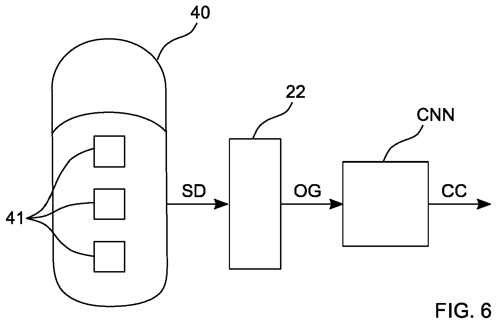

Fig. 6 shows a high-level architecture of the deep learning system for driving context determination. Sensor data SD are provided by sensors 41 of a vehicle 40. These sensor data SD are used by an occupancy grid generating unit 22 to determine an occupancy grid OG. The underlying algorithm is mainly composed of two elements, namely an occupancy grid fusion algorithm and a convolutional neural network CNN used for processing the occupancy grid OG in real-time. The outcome obtained from the system is a driving context classification CC, mapped to a number of classes: inner city, motorway, country road, tunnel, and parking lot.

The obtained classification results can be further used not only to select different autonomous driving strategies, but also to generate testing scenarios for highly autonomous driving. By adding driving context-related information, specific test cases may be generated for testing autonomous driving functionalities.

## Claims

1. A convolutional neural network (CNN) for processing input data, comprising one or more convolutional layers (CL) and one or more pooling layers (PL), **characterized in that** the convolutional neural network (CNN) employs at least one non-trainable classifier (NTC) for assigning a class label.

2. The convolutional neural network (CNN) according to claim 1, wherein the at least one non-trainable classifier (NTC) is a k-NN classifier.

3. The convolutional neural network (CNN) according to claim 1 or 2, wherein parameters of the convolutional neural network (CNN) are optimized through genetic algorithms.

4. The convolutional neural network (CNN) according to one of the preceding claims, wherein the convolutional neural network (CNN) comprises two or three pooling layers (PL).

5. The convolutional neural network (CNN) according to one of the preceding claims, wherein the input data are an occupancy grid (OG) derived from sensor data (SD) of one or more sensors (41) of a vehicle (40), and wherein the class label indicates a driving context.

6. The convolutional neural network (CNN) according to claim 5, wherein the driving context is one of inner city, motorway, country road, tunnel, and parking lot.

7. A computer program code comprising instructions, which, when executed by at least one processor, cause the at least one processor to implement the convolutional neural network (CNN) of any of claims 1 to 6.

8. A method for determining a driving context of a vehicle (40), the method comprising:
- receiving (10) sensor data (SD) of one or more sensors (41) of the vehicle (40);
- generating (11) an occupancy grid (OG) based on the sensor data (SD); and
- processing (12) the occupancy grid (OG) with a convolutional neural network (CNN) according to any of claims 1 to 6 to determine the driving context.

9. A computer program code comprising instructions, which, when executed by at least one processor, cause the at least one processor to perform the method of claim 8 for determining a driving context of a vehicle (40).

10. An apparatus (20) for determining a driving context of a vehicle (40), the apparatus (20) comprising:
- an input (21) for receiving (10) sensor data (SD) of one or more sensors (41) of the vehicle (40);
- an occupancy grid generating unit (22) for generating (11) an occupancy grid (OG) based on the sensor data (SD); and
- a convolutional neural network (CNN) according to any of claims 1 to 6 for processing (12) the occupancy grid (OG) to determine the driving context.

11. A driver assistance system configured to select a driving strategy based on a driving context of a vehicle (40), wherein the driver assistance system comprises an apparatus (20) according to claim 10 or is configured to perform a method according to claim 7 for determining the driving context.

12. An autonomous or semi-autonomous vehicle (40) comprising a driver assistance system according to claim 11.
